(19) Europäisches Patentamt
European Patent Office
Office européen des brevets

(11) Publication number: 0 095 860
B1

# (12) EUROPEAN PATENT SPECIFICATION

(45) Date of publication of patent specification: 01.10.86

(51) Int. Cl.[4]: C 08 F 14/06, C 08 F 4/34

(21) Application number: 83302829.3

(22) Date of filing: 18.05.83

## (54) Polymerisation of vinyl chloride monomer.

(30) Priority: 01.06.82 AU 4235/82

(43) Date of publication of application:
07.12.83 Bulletin 83/49

(45) Publication of the grant of the patent:
01.10.86 Bulletin 86/40

(84) Designated Contracting States:
BE CH DE FR GB LI NL SE

(56) References cited:
EP-A-0 049 966

CHEMICAL ABSTRACTS, vol. 70, no. 16, 21st April 1969, page 12, no. 68880n, Columbus, Ohio, US

CHEMICAL ABSTRACTS, vol. 77, no. 24, 11th December 1972, page 24, no. 152906c, Columbus, Ohio, US

CHEMICAL ABSTRACTS, vol. 74, no. 14, 5th April 1971, page 17, no. 64645z, Columbus, Ohio, US

(73) Proprietor: ICI AUSTRALIA LIMITED
ICI House 1 Nicholson Street P.O.Box 4311
Melbourne Victoria 3001 (AU)

(72) Inventor: Lydiate, Jack
97 Rutherford Road
Viewbank Victoria 3084 (AU)
Inventor: Marchese, Anthony Lawrence
15 Elmwood Crescent
Glen Waverley Victoria 3150 (AU)

(74) Representative: Sheller, Alan et al
Imperial Chemical Industries PLC Legal Department: Patents PO Box 6
Welwyn Garden City Herts, AL7 1HD (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 095 860 B1

**Description**

This invention relates to a process for the polymerization of vinyl monomers and in particular to a process for the polymerization of vinyl chloride monomer using a polymerization initiator comprising a diester of monoperoxyoxalic acid.

The increasing cost of energy, labour and raw materials has led to a need to improve productivity in all sectors of the chemical industry, including the manufacture of poly(vinyl chloride).

The most common commercial procedure for the manufacture of poly(vinyl chloride) involves the use of a batch process in which vinyl chloride monomer is polymerized in aqueous suspension in an autoclave using free radicals to initiate the reaction. Conversion rates in such processes are high and therefore in order to improve productivity it is necessary to reduce reaction times.

One of the ways of reducing reaction times is to increase the amount of the initiator used. However, in practice it has been found that increasing the concentration of the commercially used initiators may lead to a marked deterioration in the heat stability of the poly(vinyl chloride) produced. Presumably this deterioration results from increased concentration of initiator residues in the product.

An alternative way of reducing reaction times is to use a more active initiator. However, while it might be expected that all organic compounds which have a low thermal stability and readily decompose to give free radicals would be effective initiators for the polymerization of vinyl chloride monomer, in practice it is found that the ease with which an organic compound generates free radicals is not a reliable measure of the usefulness of that compound as an initiator for the polymerization of vinyl chloride monomer. Moreover, some compounds which are more active than the initiators currently used for the polymerisation of vinyl chloride monomer are too thermally unstable and/or shock sensitive to be of commercial use. Among compounds which have been suggested as initiators are diesters of diperoxyoxalic acid such as those disclosed in European Patent Publication 49966. Such compounds although active as initiators possess the disadvantage of being shock sensitive and as a result are generally not of use in commercial processes.

Clearly, there is a need in the art for initiators of greater activity in the polymerization of vinyl chloride monomer and which have good handling stability.

It has now been found that a selected group of organic peroxides, namely certain diesters of monoperoxyoxalic acid, are very effective initiators for the polymerisation of vinyl chloride monomer (VCM).

Accordingly the present invention provides a process for the production of a vinyl chloride polymer comprising at least 50 mole % of polymeric units derived from vinyl chloride monomer which process is characterised by the homo- or copolymerisation of vinyl chloride at a temperature in the range of from 25° to 80°C and a pressure in the range of from 1 to 20 kg/cm$^2$ (0.98 to 19.61 bars) in the presence of from 0.01 to 2%, by weight of the monomer, of a diester of monoperoxyoxalic acid of formula

$$R^1-O-O-\overset{\overset{O}{\|}}{C}-\overset{\overset{O}{\|}}{C}-OR^2 \qquad I$$

wherein $R^1$ and $R^2$ are independently selected from the group consisting of secondary and tertiary $C_4$ to $C_{10}$ alkyl, cyclohexyl, cyclohexyl substituted with $C_1$ to $C_6$ alkyl, benzyl, substituted benzyl wherein the benzene ring is substituted with $C_1$ to $C_6$ alkyl or $C_1$ to $C_6$ alkoxy, and 2-(2-phenylpropyl).

Included among the more preferred diesters of monoperoxyoxalic acid of formula I are those compounds wherein: $R^1$ is selected from the group consisting of tertiary-butyl, tertiary-pentyl, tertiary-hexyl and tertiary-heptyl; and $R^2$ is selected from the group consisting of tertiary-butyl, tertiary-pentyl, tertiary-hexyl, tertiary-heptyl, secondary-butyl, 2-pentyl, 3-pentyl, 2-hexyl, 3-hexyl, 2-heptyl, 3-heptyl, 4-heptyl, cyclohexyl, 4-(tertiary-butyl)cyclohexyl, benzyl, 4-methoxybenzyl and 2-(2-phenylpropyl).

Included among the even more preferred diesters of monoperoxyoxalic acid of formula I are those compounds wherein: $R^1$ is selected from tertiary-butyl and tertiary-pentyl; and $R^2$ is selected from the group consisting of tertiary-butyl, tertiary-pentyl, tertiary-hexyl, secondary-butyl, secondary-pentyl, 3-pentyl, cyclohexyl and 4-methoxybenzyl.

The process of the present invention may be applied to the production of vinyl chloride homopolymers or vinyl chloride copolymers containing at least 50 mole percent, and more preferably at least 80 mole percent, of units derived from vinyl chloride monomer. Monomers which may be copolymerized with vinyl chloride monomer include, for example: vinyl derivatives such as vinyl bromide, vinyl acetate, vinylidene chloride, N-vinylcarbazole, methyl vinyl ether, vinyl isobutyl ether and N-vinylpyrrolidone; α-olefins such as ethylene, propylene, butylene and isobutylene; acrylates such as acrylic acid, n-butyl acrylate, ethyl acrylate, methyl acrylate, 2-ethylhexyl acrylate, methacrylic acid, methyl methacrylate, ethyl methacrylate, n-butyl methacrylate and 2-ethylhexyl methacrylate; unsaturated nitriles such as acrylonitrile and methacrylonitrile; unsaturated dicarboxylic acid derivatives such as diallyl maleate, dibutyl maleate, diethyl fumarate, dimethyl itaconate and maleic anhydride; triallyl cyanurate, triallyl isocyanurate and trimethylolpropane trimethacrylate; and mixtures thereof.

The polymerization process of the invention may be carried out using any of the operating conditions

customarily used for the homo- or co-polymerization of vinyl chloride monomer. Conventional processes for the preparation of vinyl chloride polymers include bulk polymerization, gas phase polymerization and polymerization in an aqueous medium by suspension or emulsion polymerization techniques.

In the process of the present invention, preferably, vinyl chloride monomer is homo- or copolymerized using an aqueous suspension process with the aid of one or more suspending agents. Suitable suspending agent(s) for use in the process of the present invention may be chosen from those conventionally used in the art for the polymerization of vinyl chloride monomer in aqueous suspension. Such suspending agents include, for example, methylcellulose, hydroxymethylcellulose, hydroxyethylcellulose, hydroxypropylmethylcellulose, hydrolysed poly(vinyl acetate), gelatin, methyl vinyl ether—maleic anhydride copolymers, and mixtures thereof. A preferred suspending agent for use in the process of the present invention is partially hydrolysed poly(vinyl acetate) (PVAc).

The degree of hydrolysis of the currently commercially available PVAcs which may be used as suspension agents when the vinyl chloride monomer is polymerized in aqueous suspension according to the process of the present invention may vary within a large range. Usually the degree of hydrolysis of the PVAc is in the range of from 20 to 90 mole %. Preferably the degree of hydrolysis is in the range of from 60 to 90 mole %.

The partially hydrolysed PVAc may be used on its own as a suspension agent or in combination with a different type of suspension agent. The total amount of suspension agent used in the polymerization may vary widely and is generally between 0.05 and 2.0% by weight of the monomer.

The polymerization process of the invention is generally carried out at a temperature in the range of from 25° to 80°C and preferably from 30° to 70°C. The pressure at which the polymerization reaction may be carried out ranges from atmospheric pressure to a pressure of 20 $kg/cm^2$ but the pressure is preferably below 15 $kg/cm^2$.

One of the significant advantages of the process of the present invention is that the high order of activity of the compounds of formula I enables the polymerization reaction to be carried out at lower temperatures and/or for shorter reaction times than can be achieved using the current commercially available "high activity" initiators. For example, the polymerization of vinyl chloride monomer (2.5 kg) in aqueous suspension using one of the most active commercially available initiators, bis(4-*tert*-butylcyclohexyl) peroxydicarbonate (37 mmole), effectively 74 mmole of scavengeable free radicals), under conventional reaction conditions at a temperature of 50°C takes of the order of 120 minutes for completion. In contrast when vinyl chloride monomer (2.5 kg) is polymerized according to the process of the present invention using a compound of formula I as initiator, di(*tert*-butyl) monoperoxyoxalate (40 mmole; effectively 40 mmole of scavengeable free radicals), under identical reaction conditions at a temperature of 50°C the reaction takes of the order of only 45 minutes for completion. That is, the reaction is of the order of 2.7 times faster at effectively half the initiator radical concentration.

In hindsight, it could be argued that it might be expected that organic peroxides, such as the compounds of formula I, which have a low thermal stability and readily decompose to give free radicals would be effective initiators for the polymerization of vinyl chloride monomer. However, in practice it is found that the ease with which an organic peroxide decomposes to give free radicals is not a measure of the usefulness of that compound as an initiator for the polymerization of vinyl chloride monomer.

For example, the half-lives of the initiators acetylcyclohexane sulfonyl peroxide (ACSP) and bis(4-*tert*-butylcyclohexyl) peroxydicarbonate (BCHP; one of the most active commercially available initiators) are of the order of 30 minutes and 160 minutes respectively (measured in benzene at a temperature of 50°C) and therefore it might be expected that ACSP would be a considerably more active (faster) initiator than BCHP for the polymerization of vinyl chloride monomer. However, while ACSP begins to polymerize vinyl chloride monomer at a much faster rate than does BCHP, it appears that the ACSP may be rapidly exhausted as the higher rate of polymerization soon decreases. In the final analysis, under the same reaction conditions, a temperature of 50°C and using the same molar concentration of initiators, ACSP polymerizes vinyl chloride monomer to 75% conversion only of the order of 1.1 times faster than does BCHP.

Moreover, some peroxides which have a low thermal stability and readily decompose to give free radicals are too thermally unstable and/or shock sensitive to be used for the polymerization of vinyl chloride monomer on a commercial scale.

Therefore, it is unexpected to find a group of organic peroxides which combine the favourable features of being very effective initiators for the polymerization of vinyl chloride monomer and having adequate handling stability for use as initiators for the polymerization of vinyl chloride monomer.

The advantages which flow from the process of the present invention enabling the polymerization of vinyl chloride monomer to be carried out at lower temperatures and/or more rapidly than heretofore possible will be evident to those skilled in the art. For example, significant savings in manufacturing costs may be realized by utilizing lower reaction temperatures and/or shorter reaction times. Moreover, polymers having improved properties may be obtained by carrying out the polymerization reaction at lower temperatures.

While the process of the present invention is especially advantageous in the low temperature polymerization of vinyl chloride monomer it may also be used to advantage in higher temperature

polymerizations. For example, the initiators of formula I may be used on their own to effect shorter reaction times or they may be used together with another initiator in a mixed initiator system.

In some polymerization reactions mixed initiators may be used to particular advantage. For example, depending on the specific reaction conditions employed, a polymerization reaction according to the process of the present invention which uses a compound of formula I as the only initiator may not go to completion before the initiator is exhausted. If it is desired in the process of the present invention to utilize reaction conditions in which the initiator of formula I may be exhausted before the completion of the polymerization reaction, completion of the reaction may be effected by the use of a mixed initiator system comprising a compound of formula I and one of the less active, slower initiators. Suitable additional initiators may be chosen from those initiators known in the art to be suitable for use in the polymerization of vinyl chloride monomer including, for example, lauroyl peroxide, bis(4-*tert*-butylcyclohexyl) peroxydicarbonate, dibenzoyl peroxide, diisopropyl peroxydicarbonate, *tert*-butyl peroxypivalate, azobisisobutyronitrile, azobis-2,4-dimethylvaleronitrile and sulfonyl peroxides.

Compounds of formula I may be conveniently prepared by reacting an alcohol with oxalyl chloride followed by reacting the alkyl oxalyl chloride formed with an alkylhydroperoxide, as shown below.

i) 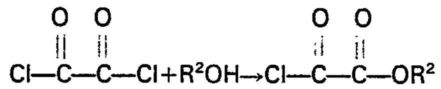

ii) 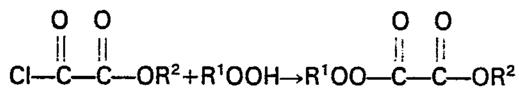

Alternatively, the compounds of formula I may be conveniently prepared by reacting an alkylhydroperoxide with oxalyl chloride followed by reacting the alkylmonoperoxyoxalyl chloride formed with an alcohol, as shown below.

iii) 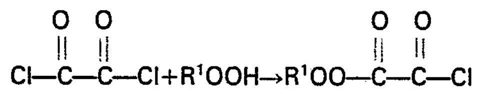

iv) 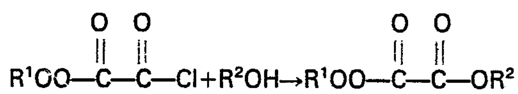

The reactions involving peroxides (ii, iii and iv above) are preferably carried out at a temperature of 0°C or below in an anhydrous inert solvent such as an aliphatic or aromatic hydrocarbon. A base, for example pyridine, may be added to the reaction mixture to neutralize the hydrogen chloride formed in the reaction.

The compounds of formula I used as an initiator in the process of the present invention may be prepared as described above and stored, preferably at a low temperature, until ready for use. Alternatively, if minimum handling and storage of the initiator is desired, the compounds of formula I may be prepared in an adjacent reaction vessel and be transferred to the polymerization reaction vessel before the polymerization reaction is begun or the compound of formula I may be prepared in situ in the polymerization vessel.

The invention is now illustrated by the following non-limiting Examples.

Example 1

Preparation of di(*tert*-butyl) monoperoxyoxalate (1)

a) A solution of *tert*-butanol (11 g; 0.15 mole) in petroleum spirit (200 ml) was added dropwise over a period of 1 hour to a stirred solution of oxalyl chloride (25.4 g; 0.2 mole) in petroleum spirit (80 ml) at ambient temperature. On completion of the addition the reaction mixture was stirred for a further three hours. The solvent was removed by distillation under reduced pressure and the product was fractionally distilled to give *tert*-butyl oxalyl chloride as a colourless liquid (19.7 g; 80%), bp 60°C at a pressure of 29 mm of mercury.

b) A solution of *tert*-butyl oxalyl chloride (19.6 g; 0.12 mole) in petroleum spirit (100 ml) was added dropwise over a period of 1 hour to a stirred solution of *tert*-butylhydroperoxide (10.8 g; 0.12 mole) and pyridine (9.4 g; 0.12 mole) in petroleum spirit (100 ml) at a temperature of −5°C. On completion of the addition the reaction mixture was stirred for a further hour at a temperature of −5°C. The reaction mixture was filtered and the pyridine hydrochloride which was collected was washed with a little ice-cold petroleum spirit. The filtrate was washed consequently with ice-cold aqueous 5% sulfuric acid, ice-cold aqueous 5% sodium carbonate and ice-cold water. The solution was then dried over anhydrous sodium sulfate and the solvent was removed by evaporation under reduced pressure at ice-bath temperature. Di(*tert*-butyl) monoperoxyoxalate was obtained as a colourless oil (22 g; 85%) and its infra-red spectrum showed the characteristic per-ester and ester carbonyl adsorptions of ν 1795 and 1760 $cm^{-1}$ respectively.

Example 2

The following diesters of monoperoxyoxalic acid were prepared from the appropriate alcohol, oxalyl chloride and the appropriate alkylhydroperoxide following essentially the same procedure as that described in Example 1 parts a) and b):

*sec*-butyl *tert*-butylperoxyoxalate (7);
cyclohexyl *tert*-butylperoxyoxalate (8);
4-(*tert*-butyl)cyclohexyl *tert*-butylperoxyoxalate (9);
3-pentyl *tert*-butylperoxyoxalate (10); and
*sec*-butyl *tert*-pentylperoxyoxalate (11).

Example 3

Preparation of di(*tert*-butyl) monoperoxyoxalate (1)

a) A solution of *tert*-butyl hydroperoxide (9.0 g; 0.1 mole) in petroleum spirit (80 ml) was added dropwise over a period of 1 hour to a stirred solution of oxalyl chloride (25.4 g; 0.2 mole) in petroleum spirit (80 ml) at a temperature of 0°C. On completion of the addition the reaction mixture was stirred for a further 3 hours at a temperature of 0°C. The solvent and excess oxalyl chloride were evaporated under reduced pressure at ice bath temperature to give *tert*-butylperoxyoxalyl chloride as a colourless oil (16.6 g; 92%) suitable for use in further preparations.

b) A solution of *tert*-butanol (7.4 g; 0.1 mole) and pyridine (7.9 g; 0.1 mole) in petroleum spirit (80 ml) was added dropwise over a period of 1 hour to a stirred solution of *tert*-butylperoxyoxalyl chloride (18.0 g; 0.1 mole) in petroleum spirit (100 ml) at a temperature of −5°C. On completion of the addition the reaction mixture was stirred for a further hour at a temperature of −5°C. The reaction mixture was filtered and the pyridine hydrochloride which was collected was washed with a little ice-cold petroleum spirit. The filtrate was washed consecutively with ice-cold aqueous 5% sulfuric acid, ice-cold aqueous 5% sodium carbonate and ice-cold water. The solution was then dried over anhydrous sodium sulfate and the solvent was removed by evaporation under reduced pressure at ice-bath temperature. Di(*tert*-butyl) monoperoxyoxalate was obtained as a colourless oil (16.4 g; 75%) and was identical by infra-red analysis to the sample prepared as described in Example 1.

Example 4

The following esters of *tert*-butylmonoperoxyoxalic acid were prepared from *tert*-butylperoxyoxalyl chloride and the appropriate alcohol following essentially the same procedure as that described in Example 3 part b):

*tert*-pentyl *tert*-butylperoxyoxalate (2);
4-methoxybenzyl *tert*-butylperoxyoxalate (3);
2-(2-phenylpropyl) *tert*-butylperoxyoxalate (4);
benzyl *tert*-butylperoxyoxalate (5); and
*tert*-hexyl *tert*-butylperoxyoxalate (6).

Examples 5—11

Water (3 650 ml) and the initiator di(*tert*-butyl) monoperoxyoxalate were added to a 7.5 l stainless steel, jacketed and agitated autoclave. The autoclave was sealed, agitation was commenced and the autoclave was evacuated. A 1% w/w solution (384 ml) of partially hydrolysed poly(vinyl acetate) and vinyl chloride monomer (2.5 kg) were added to the autoclave. The vessel was heated to the reaction temperature and maintained at that temperature until the pressure in the reaction vessel dropped indicating completion of the reaction. The polymer was discharged from the reaction vessel and the yield and the properties of the polymer were determined. The reaction conditions and yield, and the properties of the polymer are recorded in Tables 1 and 2 below.

TABLE 1
Reaction conditions

| Example No. | Reaction temperature (°C) | Initiator concentration (mmole) | Reaction time to pressure drop (min) | Yield (%) |
|---|---|---|---|---|
| 5 | 35 | 40 | 120 | 85 |
| 6 | 40 | 40 | 103 | 74 |
| 7 | 45 | 40 | 81 | 76 |
| 8 | 45 | 50 | 43 | — |
| 9 | 50 | 40 | 45 | 80 |
| 10 | 50 | 40 | 35 | 79 |
| 11 | 55 | 35 | No drop | 56 |

TABLE 2
Polymer properties

| Property | Example No. | | | | | |
|---|---|---|---|---|---|---|
| | 5 | 6 | 7 | 9 | 10 | 11 |
| A.D. | 392 | 429 | 435 | 465 | 445 | 541 |
| K | 77.8 | — | 70.3 | 64.8 | — | 61.3 |
| C.P.A. | 37.3 | 34.3 | 33.4 | 26.6 | 33.8 | 30.5 |
| G.S.D. <81 | 4.0 | 3.5 | 1.7 | 14.2 | 1.2 | 4.8 |
| >256 | 5.3 | 0 | 4.2 | 0 | 6.6 | 0.3 |

Property Code:
A.D. — Apparent Density, expressed in g/l.
K — K-value (ISO test), a measure of the intrinsic viscosity of a dilute solution of PVC in cyclohexanone at 25°C determined by the ISO test method.
C.P.A. — Cold Plasticizer Absorption, the percent by weight of the plasticizer di-isooctyl phthalate absorbed by a fixed mass of resin over a period of one hour at a temperature of 25°C.
G.S.D. — Granule Size Distribution (measured by Coulter Counter); expressed as the percent by weight of the polymer of size below 81 μ and above 256 μ.

Examples 12—26

These Examples illustrate the use of diesters of monoperoxyoxalic acid as initiators for the polymerization of vinyl chloride monomer and diesters of monoperoxyoxalic acid in admixture with bis(4-*tert*-butylcyclohexyl)peroxydicarbonate as mixed initiator systems for the polymerization of vinyl chloride monomer.

The general procedure described for Examples 5 to 11 was repeated replacing the polymerization initiator di(*tert*-butyl) monoperoxyoxalate with the initiator or mixture of initiators indicated. Examples 12 to 20 and 24 to 26 were carried out using exactly the same scale described for Examples 5 to 11. Examples 21 to 23 were carried out using a 35 l autoclave on five times the scale described for Examples 5 to 11. All polymerization reactions were run at a temperature of 51°C.

The initiator and the amount thereof used, the reaction time to pressure drop and the polymer yields are recorded in Table 3 below and the polymer properties are recorded in Table 4 below.

The initiators used in Examples 12 to 26 were as follows:

| Example No. | Code | Initiator |
|---|---|---|
| 12 | PBPO | *tert*-pentyl *tert*-butylperoxyoxalate |
| 13 | HBPO | *tert*-hexyl *tert*-butylperoxyoxalate |
| 14 | SBPO | *sec*-butyl *tert*-butylperoxyoxalate |
| 15 | CBPO | cyclohexyl *tert*-butylperoxyoxalate |
| 16 | PBPO | 3-pentyl *tert*-butylperoxyoxalate |
| 17 | PSPO | *tert*-pentyl *sec*-butylperoxyoxalate |
| 18—23 | BMPO<br>BCHP | di(*tert*-butyl)monoperoxyoxalate and<br>bis(4-*tert*-butylcyclohexyl)peroxydicarbonate |
| 24 | MBBPO<br>BCHP | 4-methoxybenzyl *tert*-butylperoxyoxalate and<br>bis(4-*tert*-butylcyclohexyl)peroxydicarbonate |
| 25 | SBPO<br>BCHP | *sec*-butyl *tert*-butylperoxyoxalate and<br>bis(4-*tert*-butylcyclohexyl)peroxydicarbonate |
| 26 | PSPO<br>BCHP | *tert*-pentyl *sec*-butylperoxyoxalate and<br>bis(4-*tert*-butylcyclohexyl)peroxydicarbonate |

TABLE 3

| Example No. | Initiator | | Reaction time to pressure drop (min) | Yield (%) |
|---|---|---|---|---|
| | Type | Concentration (mmole) | | |
| 12 | PBPO | 38 | 26 | 87 |
| 13 | HBPO | 35 | 25 | 85 |
| 14 | SBPO | 30 | 77 | 87 |
| 15 | CBPO | 30 | 63 | 90 |
| 16 | PBPO | 30 | 63 | 85 |
| 17 | PSPO | 30 | 44 | 88 |
| 18 | BMPO | 9 | 143 | 87 |
| | BCHP | 10 | | |
| 19 | BMPO | 9 | 165 | — |
| | BCHP | 10 | | |
| 20 | BMPO | 18 | 121 | 83 |
| | BCHP | 10 | | |
| 21 | BMPO | 13.5 | 240 | — |
| | BCHP | 28 | | |
| 22 | BMPO | 21 | 193 | 85 |
| | BCHP | 28 | | |
| 23 | BMPO | 42 | 108 | 84 |
| | BCHP | 45 | | |
| 24 | MBBPO | 35 | 84 | 85 |
| | BCHP | 2.5 | | |
| 25 | SBPO | 10 | 129 | 92 |
| | BCHP | 10 | | |
| 26 | PSPO | 10 | 115 | 86 |
| | BCHP | 10 | | |

TABLE 4
Polymer properties

| Property | Example No. | | | | | | |
|---|---|---|---|---|---|---|---|
| | 13 | 14 | 15 | 16 | 17 | 25 | 26 |
| A.D. | 482 | 449 | 442 | 432 | 450 | 428 | 452 |
| K | 66.8 | — | 69.3 | 68.7 | 65.4 | 71.6 | 71.2 |
| C.P.A. | 29.1 | 27.4 | 30.9 | 32.3 | 29.0 | 23.4 | 23.8 |
| G.S.D. <81 | 4.0 | 4.9 | 6.5 | — | 2.0 | 3.0 | 3.0 |
| >256 | 0.5 | 3.0 | 0 | — | 2.0 | 0 | 0 |

* For property code see Examples 5 to 11 Table 2.

Comparative Examples A, B, C and D

In order to compare the effectiveness of the polymerization process of the invention to prior art polymerization processes the general reaction procedure described in Examples 5 to 11 was repeated replacing the polymerization initiator di(*tert*-butyl) monoperoxyoxalate with either bis(4-*tert*-butylcyclohexyl)peroxydicarbonate (BCHP; one of the most active commercially available initiators for the polymerization of vinyl chloride monomer) or a mixture of BCHP and lauroyl peroxide (LP).

The reaction conditions are detailed in Table 5 below and the polymer properties are detailed in Table 6 below.

The Comparative Examples show that the prior art processes for the polymerization of vinyl chloride monomer using BCHP or BCHP and LP as initiators give poly(vinyl chloride) having comparable properties with the polymer produced by the process of the present invention. However, it is clear that the time required for the completion of the prior art polymerization process is considerably longer than the time required for the completion of the polymerization process of the present invention. For example, when vinyl chloride monomer (2.5 kg) was polymerized at a temperature of 51°C using BCHP (37 mmoles; effectively 74 mmoles of scavengeable free radicals) as initiator the reaction time to pressure drop was 120 min (Comparative Example B, Table 5). In contrast when the same amount of vinyl chloride monomer was polymerized under the same conditions using di(*tert*-butyl)monoperoxyoxalate (40 mmoles; effectively 40 mmoles of scavengeable free radicals) as initiator the reaction time to pressure drop was only 45 minutes (Example 9, Table 1). That is, the reaction was of the order of 2.7 times faster at effectively half the initiator radical concentration.

TABLE 5
Reaction conditions

| Example No. | Reaction temperature (°C) | Initiator concentration | | | Reaction time (to pressure drop; min) |
|---|---|---|---|---|---|
| | | Initiator | % w/w based on VCM | (mmoles) | |
| A | 51 | BCHP | 0.16 | 10 | 228 |
| B | 51 | BCHP | 0.60 | 37 | 120 |
| C | 57 | BCHP | 0.08 | 5 | 240 |
| D | 70 | BCHP | 0.04 | 2.5 | 245 |
| | | +LP | 0.04 | 2.5 | |

TABLE 6
Polymer properties

| Property* | Example No. A | B | C | D |
|---|---|---|---|---|
| A.D. | 565 | 521 | 585 | 623 |
| K | 71.7 | 70.8 | 66.5 | 56.9 |
| C.P.A. | 25.6 | 26.5 | 23.8 | 10.7 |
| G.S.D. | | | | |
| <81 | 0.3 | 2.9 | 5.0 | 0.1 |
| 102—203 | 92.1 | 86.2 | 83.0 | 93.6 |
| 203—256 | 7.4 | 7.7 | 6.8 | 2.5 |
| >256 | 0.3 | 0.8 | 0 | 0.5 |

* For property code see Examples 5 to 11 Table 2.

**Claims**

1. A process for the production of a vinyl chloride polymer comprising at least 50 mole percent of polymeric units derived from vinyl chloride monomer which process is characterised by the homo- or copolymerisation of vinyl chloride at a temperature in the range of from 25°C to 80°C and at a pressure in the range of from 1 to 20 kg/cm$^2$ (0.98 to 19.61 bars) in the presence of from 0.01 to 2%, by weight of the monomer, of a diester of monoperoxyoxalic acid of formula

$$R^1—O—O—\overset{\overset{O}{\|}}{C}—\overset{\overset{O}{\|}}{C}—O—R^2$$

wherein $R^1$ and $R^2$ are independently selected from the group consisting of secondary and tertiary $C_4$ to $C_{10}$ alkyl, cyclohexyl, cyclohexyl substituted with $C_1$ to $C_6$ alkyl, benzyl, substituted benzyl wherein the benzene ring is substituted with $C_1$ to $C_6$ alkyl or $C_1$ to $C_6$ alkoxy, and 2-(2-phenylpropyl).

2. A process according to claim 1 wherein in said diester: $R^1$ is selected from the group consisting of tertiary-butyl, tertiary-pentyl, tertiary-hexyl and tertiary-heptyl; and $R^2$ is selected from the group consisting of tertiary-butyl, tertiary-pentyl, tertiary-hexyl, tertiary-heptyl, secondary-butyl, 2-pentyl, 3-pentyl, 2-hexyl, 3-hexyl, 2-heptyl, 3-heptyl, 4-heptyl, cyclohexyl, 4-(tertiary-butyl)cyclohexyl, benzyl, 4-methoxybenzyl and 2-(2-phenylpropyl).

3. A process according to either claim 1 or claim 2 wherein in said diester: $R^1$ is selected from tertiary-butyl and tertiary-pentyl; and $R^2$ is selected from the group consisting of tertiary-butyl, tertiary-pentyl, tertiary-hexyl, secondary-butyl, secondary-pentyl, 3-pentyl, cyclohexyl and 4-methoxybenzyl.

4. A process according to any one of claims 1 to 3 inclusive wherein the diester is a monoperoxyoxalic acid diester selected from the group consisting of tertiary-hexyl tertiary-butylperoxyoxalate, tertiary-pentyl tertiary-butylperoxyoxalate, di(tertiary-butyl) monoperoxyoxalate and secondary-butyl tertiary-pentylperoxyoxalate.

5. A process according to any one of claims 1 to 4 inclusive wherein the vinyl chloride monomer is homo- or copolymerized in aqueous suspension with the aid of at least one suspension agent.

6. A process according to claim 5 wherein the suspension agent is partially hydrolysed poly(vinyl acetate).

7. A process according to any one of claims 1 to 6 inclusive wherein the polymerization process is carried out at a temperature in the range of from 30° to 70°C.

8. A process according to any one of claims 1 to 7 inclusive wherein the said diester compound is either prepared in an adjacent reaction vessel and transferred to the polymerization reaction vessel before the polymerization is begun or prepared in situ in the polymerization vessel before the polymerization reaction is begun.

9. A process according to any one of claims 1 to 8 inclusive wherein the polymerization reaction is carried out in the presence of at least one other polymerization initiator in addition to the said diester.

**Patentansprüche**

1. Verfahren zur Herstellung eines Vinylchlorid-Polymers, das mindestens 50 Molprozent Polymereinheiten, die von Vinylchlorid-Monomer abgeleitet sind, enthält, gekennzeichnet durch die Homo- oder Copolymerisation von Vinylchlorid bei einer Temperatur im Bereich von 25°C bis 80°C und bei einem Druck im Bereich von 1 bis 20 kg/cm$^2$ (0,98 bis 19,61 bar) in Gegenwart von 0,01 bis 2%, auf die Masse des Monomers bezogen, eines Diesters der Monoperoxyoxalsäure der Formel

$$R^1-O-O-\overset{\overset{O}{\|}}{C}-\overset{\overset{O}{\|}}{C}-O-R^2$$

worin $R^1$ und $R^2$ unabhängig aus der Gruppe ausgewählt sind, die aus sekundärem und tertiärem $C_4$- bis $C_{10}$-Alkyl, Cyclohexyl, mit $C_1$- bis $C_6$-Alkyl substituiertem Cyclohexyl, Benzyl substituiertem Benzyl, worin der Benzolring mit $C_1$- bis $C_6$-Alkyl oder mit mit $C_1$- bis $C_6$-Alkoxy substituiert ist, und 2-(2-Phenylpropyl) besteht.

2. Verfahren nach Anspruch 1, bei dem in dem erwähnten Diester $R^1$ aus der Gruppe ausgewählt ist, die aus tert.-Butyl, tert.-Pentyl, tert.-Hexyl und tert.-Heptyl besteht, und $R^2$ aus der Gruppe ausgewählt is, die aus tert.-Butyl, tert.-Pentyl, tert.-Hexyl, tert.-Heptyl, sek.-Butyl, 2-Pentyl, 3-Pentyl, 2-Hexyl, 3-Hexyl, 2-Heptyl, 3-Heptyl, 4-Heptyl, Cyclohexyl, 4-(tert.-Butyl)-cyclohexyl, Benzyl, 4-Methoxybenzyl und 2-(2-Phenylpropyl) besteht.

3. Verfahren nach Anspruch 1 oder Anspruch 2, bei dem in dem erwähnten Diester $R^1$ aus tert.-Butyl und tert.-Pentyl ausgewählt ist und $R^2$ aus der Gruppe ausgewählt ist, die aus tert.-Butyl, tert.-Pentyl, tert.-Hexyl, sek.-Butyl, sek.-Pentyl, 3-Pentyl, Cyclohexyl und 4-Methoxybenzyl besteht.

4. Verfahren nach einem der Ansprüche 1 bis einschließlich 3, bei dem der Diester ein Monoperoxyoxalsäurediester ist, der aus der Gruppe ausgewählt ist, die aus tert.-Hexyl tert.-butylperoxyoxalat, tert.-Pentyl-tert.-butylperoxyoxalat, Di-(tert.-butyl)-monoperoxyoxalat und sek.-Butyl-tert.-pentylperoxyoxalat besteht.

5. Verfahren nach einem der Ansprüche 1 bis einschließlich 4, bei dem das Vinylchlorid-Monomer in wäßriger Suspension mit Hilfe mindestens eines Suspendiermittels homo- oder copolymerisiert wird.

6. Verfahren nach Anspruch 5, bei dem das Suspendiermittel partiell hydrolysiertes Polyvinylacetat ist.

7. Verfahren nach einem der Ansprüche 1 bis einschließlich 6, bei dem das Polymerisationsverfahren bei einer Temperatur im Bereich von 30° bis 70°C durchgeführt wird.

8. Verfahren nach einem der Ansprüche 1 bis einschließlich 7, bei dem die erwähnte Diesterverbindung entweder in einem benachbarten Reaktionsbehälter hergestellt und in den Polymerisations-Reaktionsbehälter übergeführt wird, bevor die Polymerisation begonnen hat, oder in dem Polymerisationsbehälter in situ hergestellt wird, bevor die Polymerisationsreaktion begonnen hat.

9. Verfahren nach einem der Ansprüche 1 bis einschließlich 8, bei dem die Polymerisationsreaktion in Gegenwart mindestens eines weiteren Polymerisationsinitiators zusätzlich zu dem erwähnten Diester durchgeführt wird.

**Revendications**

1. Procédé de production d'un polymère de chlorure de vinyle comprenant au moins 50 moles % de motifs polymériques dérivés de chlorure de vinyle monomère, procédé caractérisé par l'homopolymérisation ou la copolymérisation de chlorure de vinyle à une température comprise dans l'intervalle de 25 à 80°C et à une pression comprise dans l'intervalle de 1 à 20 kg/cm$^2$ (0,98 à 19,61 bars) en présence de 0,01 à 2%, par rapport au poids du monomère, d'un diester d'acide monoperoxyoxalique de formule

$$R^1-O-O-\overset{\overset{O}{\|}}{C}-\overset{\overset{O}{\|}}{C}-O-R^2$$

dans laquelle $R^1$ et $R^2$ sont choisis, indépendamment, dans le groupe comprenant des radicaux alkyle secondaires et tertiaires en $C_4$ à $C_{10}$, cyclohexyle, cyclohexyle à substituant alkyle en $C_1$ à $C_6$, benzyle, benzyle substitué dont le noyau benzénique porte un substituant alkyle en $C_1$ à $C_6$ ou alkoxy en $C_1$ à $C_6$, et 2-(2-phénylpropyle).

2. Procédé suivant la revendication 1, dans lequel $R^1$, dans ledit ester, est choisi dans le groupe comprenant les radicaux tertio-butyle, tertio-pentyle, tertio-hexyle et tertio-heptyle et $R^2$ est choisi dans le groupe comprenant les radicaux tertio-butyle, tertio-pentyle, tertio-hexyle, tertio-heptyle, sec.-butyle, 2-pentyle, 3-pentyle, 2-hexyle, 3-hexyle, 2-heptyle, 3-heptyle, 4-heptyle, cyclohexyle, 4-(tertio-butyl)cyclohexyle, benzyle, 4-méthoxybenzyle et 2-(2-phénylpropyle).

3. Procédé suivant la revendication 1 ou 2, dans lequel, dans ledit ester: $R^1$ est choisi entre les radicaux tertio-butyle et tertio-pentyle; et $R^2$ est choisi dans le groupe comprenant les radicaux tertio-butyle, tertio-pentyle, tertio-hexyle, sec.-butyle, sec.-pentyle, 3-pentyle, cyclohexyle et 4-méthoxybenzyle.

4. Procédé suivant l'une quelconque des revendications 1 à 3 inclus, dans lequel le diester est un diester d'acide monoperoxyoxalique choisi dans le groupe comprenant le tertio-butylperoxyoxalate de tertio-hexyle, le tertio-butylperoxyoxalate de tertio-pentyle, le mono-peroxyoxalate de di(tertio-butyle) et le tertio-pentylperoxyoxalate de sec.-butyle.

5. Procédé suivant l'une quelconque des revendications 1 à 4 inclus, dans lequel le chlorure de vinyle monomère est homopolymérisé ou copolymérisé en suspension aqueuse avec l'aide d'au moins un agent de mise en suspension.

6. Procédé suivant la revendication 5, dans lequel l'agent de mise en suspension consiste en poly(acétate de vinyle) partiellement hydrolysé.

7. Procédé suivant l'une quelconque des revendications 1 à 6 inclus, dans lequel le processus de polymérisation est mis en oeuvre à une température comprise dans l'intervalle de 30 à 70°C.

8. Procédé suivant l'une quelconque des revendications 1 à 7 inclus, dans lequel le diester est ou bien préparé dans un récipient réactionnel adjacent et transféré dans le réacteur de polymérisation avant le début de la polymérisation, ou bien préparé in situ dans le récipient de polymérisation avant que la réaction de polymérisation ne débute.

9. Procédé suivant l'une quelconque des revendications 1 à 8 inclus, dans lequel la réaction de polymérisation est conduite en présence d'au moins un autre initiateur de polymérisation en plus du diester.